# EUROPÄISCHE PATENTSCHRIFT

(11) **EP 2 242 950 B1**
(45) Veröffentlichungstag und Bekanntmachung des Hinweises auf die Patenterteilung: **17.10.2018**
(21) Anmeldenummer: 09712060.4
(22) Anmeldetag: 12.02.2009
(51) Int. Cl.: F23B 40/02, F23C 9/00, F23K 3/00

(54) **FEUERUNGSANLAGE MIT WURFBESCHICKER**
FURNACE WITH STOKER
INSTALLATION DE CHAUFFAGE AVEC CHARGEUR

(30) Priorität: 18.02.2008 DE 102008009683
(43) Veröffentlichungstag der Anmeldung: 27.10.2010
(73) Patentinhaber: Christof International Management GmbH, 1030 Wien (AT)
(72) Erfinder: MADLSPERGER, Wolfgang, A-4210 Unterweitersdorf (AT)
(74) Vertreter: Babeluk, Michael
(86) Internationale Anmeldenummer: PCT/EP2009/051619
(87) Internationale Veröffentlichungsnummer: WO 2009/103654

(56) Entgegenhaltungen:
- DE-A1- 1 577 554
- DE-A1- 19 733 946
- DE-B4- 10 231 522
- DE-U1- 8 806 500
- FR-A- 781 237
- FR-A1- 2 382 388
- US-A- 3 610 182
- US-A- 4 646 637
- US-A- 4 759 156

## Beschreibung

Die Erfindung betrifft eine Feuerungsanlage mit Wurfbeschicker umfassend ein Schleuderrad mit mehreren, auf einer Grundplatte angeordneten Flügeln.

Die Erfindung wird bei Feuerungsanlagen mit Schleuderrad-Wurfbeschickung eingesetzt. Der feste, kleinteilige Brennstoff wird dabei mit Hilfe des in einem Wurfbeschicker angeordneten Schleuderrades in den Feuerraum eingebracht. Durch Änderung der Drehzahl des Schleuderrades kann die Wurfweite eingestellt werden.

In der Regel ist dabei das Schleuderrad waagrecht angeordnet, also die Drehachse des Schleuderrads steht senkrecht. Der Brennstoff wird von oben im Bereich der Nabe des Schleuderrades in das Gehäuse des Wurfbeschickers eingebracht und dann mit Hilfe der Flügel des Schleuderrades waagrecht nach außen und - durch Öffnungen des Wurfbeschickers - in den Feuerraum gefördert. Bisher wurden hierzu Schleuderräder verwendet, bei denen die Flügel eine konstante Höhe haben.

Je nach Brennstoff ist das mit hoher Geschwindigkeit rotierende Schleuderrad jedoch einem hohen Verschleiß unterworfen. Die Brennstoffteilchen treffen bei Eintritt in den Wurfbeschicker nur auf die Oberkante der Flügel und werden daher nur stoßartig auf die erforderliche Austrittsgeschwindigkeit beschleunigt. Dadurch ergibt sich eine verlustreiche Übertragung der kinetischen Energie des Schleuderrades auf den Brennstoff, die mit hohem Verschleiß der Flügel des Schleuderrades verbunden ist.

Eine Möglichkeit zur Verringerung des Verschleißes bestünde nun darin, die Drehzahl des Schleuderrades möglichst gering einzustellen. Dadurch wird aber die Wurfweite für den Brennstoff eingeschränkt und möglicherweise die optimale Brennstoffverteilung im Feuerraum nicht erreicht. Eine Feuerungsanlage mit Wurfbeschicker gemäß dem Oberbegriff des Anspruchs 1 ist aus US4646637 bekannt.

Eine Aufgabe der Erfindung ist es nun, die Energieübertragung vom Schleuderrad auf den Brennstoff zu verbessern und damit den Verschleiß der Oberkanten der Flügel des Schleuderrades zu verringern.

Die Aufgabe wird durch ein Schleuderrad nach Anspruch 1 gelöst, gemäß welchem die Höhe der Flügel in radialer Richtung zumindest in einem Bereich zunimmt und gegebenenfalls in einem oder mehreren übrigen Bereichen gleich bleibt, und die Höhe des Flügels am inneren Ende des Flügels kleiner als am äußeren Ende des Flügels ist.

Mit anderen Worten nimmt also die Höhe des Flügels nach außen hin zu, sie kann über manche Bereiche auch gleichbleiben, sie darf aber in keinem Bereich abnehmen. Auf jeden Fall ist der Flügel innen weniger hoch als außen. Dadurch treffen die Brennstoffteilchen beim nach außen Wandern auf immer höhere Flügelbereiche, sie gleiten dabei an den Flügeln nach außen und werden kontinuierlich ohne Stöße beschleunigt.

Als Folge davon wird die Verschleißbelastung von der inneren Flügeloberkante auf einen größere Fläche verteilt, sodass dadurch der Verschleiß an der Flügeloberkante verringert wird.

Da weiters durch die Verringerung der Stöße eine bessere kinetische Energieübertragung vom Schleuderrad auf den Brennstoff erfolgt, kann die Drehzahl des Schleuderrades verringert werden.

Eine mögliche Ausführungsform besteht darin, dass die Höhe der Flügel vom inneren Ende an in einem ersten Bereich ansteigt und anschließend in einem zweiten Bereich bis zum äußeren Ende gleich bleibt. Dies hat den Vorteil, dass im inneren Bereich der Flügel, wo in der Regel der Brennstoff zugeführt wird, der Brennstoff kontinuierlich an den aufsteigenden Oberkanten der Flügel beschleunigt wird und in zweiten Bereich, wo kein Brennstoff mehr direkt von oben zugeführt wird, weiter nach außen geleitet wird.

Im Idealfall sollte die Höhe des Flügels am inneren Ende gleich Null sein. Falls dadurch die Festigkeit des Flügels nicht gewährleistet ist, kann der Flügel weiter außen verstärkt werden, etwa durch zusätzliche Bleche.

Der erfindungsgemäße Effekt sollte sich aber auf jeden Fall auch einstellen, wenn die Höhe der Flügel am inneren Ende kleiner als die halbe maximale Höhe der Flügel ist.

Natürlich kann der Effekt der Erfindung gesteigert werden, wenn die Flügel aus dem Bereich der Nabe der Grundplatte herausgerückt werden, da die Zuleitung des Brennstoffes ja in der Regel konzentrisch zur Nabe erfolgt. Diesbezüglich kann vorgesehen werden, dass die inneren Enden der Flügel einen Abstand zur Nabe der Grundplatte aufweisen.

Die Anordnung und die Form der Flügel kann abgesehen von der Höhe der Flügel je nach Bedarf variiert werden: die Flügel können gerade oder gebogen sein; sie können radial von der Nabe nach außen verlaufen, sie können tangential zur Nabe angeordnet sein oder sie können weder direkt noch indirekt (über eine gedachte Verlängerung) die Nabe berühren. Die Flügel können direkt an die Nabe anschließen oder eben erst in einem Abstand von der Nabe beginnen.

Die Flügel werden aber in der Regel immer bis zum Rand der Grundplatte reichen und sie sind längs der gesamten Unterkante fest mit der Grundplatte verbunden.

Auch die Anzahl der Flügel hängt von der Brennstoffart und -menge ab. Gebräuchlich sind 2, 4 oder 6 Flügel.

Wird das erfindungsgemäße Schleuderrad in einen Wurfbeschicker eingebaut, so umfasst dieser zumindest ein Gehäuse mit zumindest einer Zufuhröffnung für Brennstoff und zumindest einer Auswurföffnung für Brennstoff.

Dabei ist eben zweckmäßigerweise eine Zufuhröffnung für Brennstoff vorgesehen, die konzentrisch zur Drehachse des Schleuderrades ist, sodass Brennstoff in Richtung der Drehachse auf das Schleuderrad aufgebracht werden kann.

Ebenso kann eine umlaufende Auswurföffnung für Brennstoff vorgesehen sein, die normal zur Drehachse des Schleuderrades angeordnet ist, sodass Brennstoff in der Ebene des Schleuderrads aus dem Schleuderrad ausgeworfen werden kann.

Damit der Brennstoff in jenem Bereich auftrifft, wo die Flügelhöhe gering ist, kann vorgesehen werden, dass die maximale Höhe der Flügel erst außerhalb des Durchmessers der Zuführöffnung erreicht wird.

Ein Ausführungsbeispiel der Erfindung ist in den Figuren dargestellt und wird im Folgenden erläutert. Dabei zeigen:
Fig. 1 eine schematische Darstellung eines Wurfbeschickers mit Schleuderrad gemäß dem bisherigen Stand der Technik (links) sowie gemäß der Erfindung (rechts),
Fig. 2 Ansicht und Draufsicht für ein erfindungsgemäßes Schleuderrad mit geraden Flügeln,
Fig. 3 Ansicht und Draufsicht für ein erfindungsgemäßes Schleuderrad mit gebogenen Flügeln.

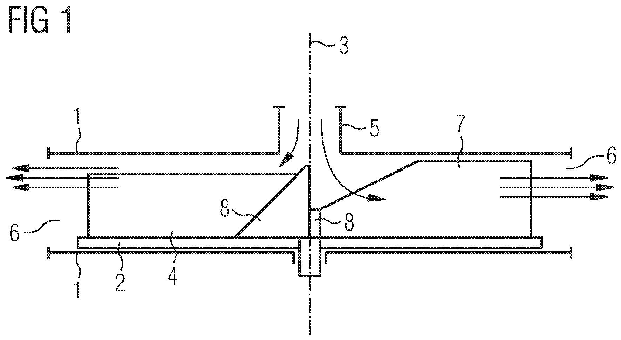

In Fig. 1 ist schematisch ein Wurfbeschicker dargestellt, in dessen Gehäuse 1 ein Schleuderrad angeordnet ist. Das Gehäuse 1 weist eine zentrale Zufuhröffnung 5 auf, durch welche Brennstoff (siehe Pfeile) von oben zugeführt werden kann. Dieser Brennstoff (siehe Pfeile) tritt aus dem Gehäuse 1 durch die Auswurföffnung 6 wieder aus.

Der Brennstoff wird dabei durch das Schleuderrad befördert. Dies besteht aus einer Grundplatte 2, einer Nabe 8 und Flügeln. Der linke Teil der Figur zeigt ein Schleuderrad mit herkömmlichen Flügeln 4, die über die gesamte Länge konstante Höhe haben.

Der rechte Teil der Figur zeigt ein erfindungsgemäßes Schleuderrad mit Flügeln 7, deren Höhe von innen nach außen zunimmt. In einem ersten Bereich nimmt die Höhe des Flügels 7 von einer Höhe, die kleiner als die halbe maximale Höhe des Flügels ist, bis zur maximalen Höhe zu. Im zweiten Bereich bleibt die Höhe des Flügels 7 bis zum äußeren Ende des Flügels 7 gleich (maximale Höhe). Die Nabe 8 ist hier gleich hoch wie das innere Ende des Flügels 7. Der erste Bereich des Flügels, der direkt an die Nabe 8 anschließt, reicht etwa bis zur Hälfte des Flügels. Wesentlich ist jedoch das Verhältnis zur Zuführöffnung 5, deren Durchmesser - in radialer Richtung gesehen - endet, bevor der Flügel 7 seine maximale Höhe erreicht hat.

Durch das Zuführen des Brennstoffs von oben wird erreicht, dass die Brennstoffteilchen möglichst weit unter die Oberkante der Flügel bzw. sogar bis zur Grundplatte fallen. Die Brennstoffteilchen werden folglich nicht nur von der Flügeloberkante, sondern vom gesamten, in diesem Bereich niedrigeren Flügel erfasst und nach außen gefördert.

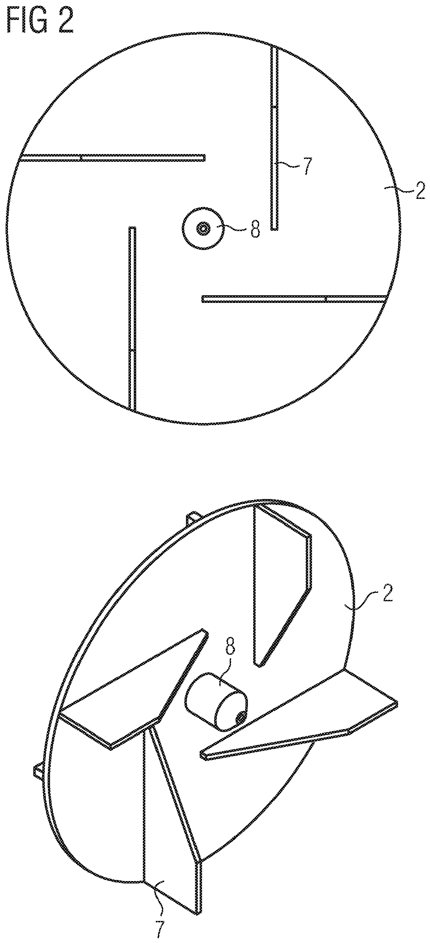

Fig. 2 zeigt eine andere mögliche Ausführung des Schleuderrads. Hier sind vier Flügel 7 auf der Grundplatte 2 angebracht. Die Flügel 7 schließen an ihrer Innenseite nicht an der Nabe 8 an, sondern sind etwa um einen Drittel Radius der Grundplatte 2 nach außen versetzt. Die innere Höhe des Flügel ist so niedrig wie möglich gewählt, etwa in der Dicke des Blechs der Flügel. Die Höhe der Flügel steigt längs einer Geraden an und erreich nach etwa 2/3 der Länge des Flügels 7 die maximale Höhe.

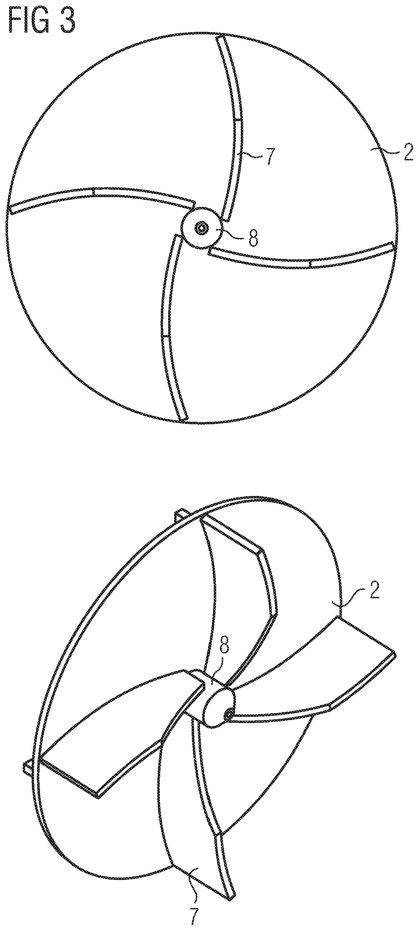

Fig. 3 zeigt eine weitere Ausführungsform des Schleuderrads. Hier sind ebenfalls vier Flügel 7 auf der Grundplatte 2 angeordnet, allerdings sind die Flügel 7 hier gebogen und schließen tangential an die Nabe 8 an. Die Flügel 7 haben an ihrem inneren Ende eine Höhe von etwas weniger als der Hälfte der maximalen Höhe. Die maximale Höhe der Flügel 7 wird etwas nach der Hälfte der Länge der Flügel erreicht.

Als Werkstoff für die Flügel wird hoch verschleißfester Stahl verwendet.

Die Grundplatte 2 der hier gezeigten Schleuderräder hat einen Durchmesser von 450mm, die maximale Höhe der Flügel 7 beträgt 85mm. Diese Größen sind jedoch immer für eine bestimmte Anlage anzupassen.

### Bezugszeichen:

- 1: Gehäuse des Wurfbeschickers
- 2: Grundplatte
- 3: Drehachse
- 4: Flügel mit konstanter Höhe (Stand der Technik)
- 5: Zufuhröffnung
- 6: Auswurföffnung
- 7: Flügel
- 8: Nabe

## Patentansprüche

1. Feuerungsanlage mit einem Wurfbeschicker umfassend zumindest ein Gehäuse (1) mit zumindest einer Zufuhröffnung (5) für Brennstoff, die konzentrisch zur Drehachse (3) des Schleuderrades ist, mit zumindest einer Auswurföffnung (6) für Brennstoff und mit einem Schleuderrad mit mehreren, auf einer Grundplatte (2) angeordneten Flügeln (7), wobei die Höhe der Flügel (7) in radialer Richtung zumindest in einem Bereich zunimmt und in einem oder mehreren übrigen Bereichen gleich bleibt, und die Höhe des Flügels (7) am inneren Ende des Flügels (7) kleiner als am äußeren Ende des Flügels ist, **dadurch gekennzeichnet, dass** die maximale Höhe der Flügel (7) erst außerhalb des Durchmessers der Zuführöffnung (5) erreicht wird.

2. Wurfbeschicker nach Anspruch 1, **dadurch gekennzeichnet, dass** die Höhe der Flügel (7) vom inneren Ende an in einem ersten Bereich ansteigt und anschließend in einem zweiten Bereich bis zum äußeren Ende gleich bleibt.

3. Wurfbeschicker nach einem der Ansprüche 1 oder 2, **dadurch gekennzeichnet, dass** die Höhe der Flügel (7) am inneren Ende gleich Null ist.

4. Wurfbeschicker nach einem der Ansprüche 1 bis 3, **dadurch gekennzeichnet, dass** die Höhe der Flügel (7) am inneren Ende kleiner als die halbe maximale Höhe der Flügel (7) ist.

5. Wurfbeschicker nach einem der Ansprüche 1 bis 4, **dadurch gekennzeichnet, dass** die inneren Enden der Flügel (7) einen Abstand zur Nabe (8) der Grundplatte (2) aufweisen.

6. Wurfbeschicker nach einem der Ansprüche 1 bis 5, **dadurch gekennzeichnet, dass** eine umlaufende Auswurföffnung (6) für Brennstoff vorgesehen ist, die normal zur Drehachse (3) des Schleuderrades angeordnet ist, so dass Brennstoff in der Ebene des Schleuderrads aus dem Schleuderrad ausgeworfen werden kann.

## Claims

1. Furnace with a throw feeder, comprising at least one housing (1) having at least one feed opening (5) for fuel, which is concentric to the axis of rotation (3) of the centrifugal wheel, having at least one ejection opening (6) for fuel and a centrifugal wheel with several wings (7) arranged on a base plate (2), wherein the height of the wings (7) increases in the radial direction at least in one region and remains the same in one or more remaining regions, and the height of the wing (7) at the inner end of the wing (7) is smaller than at the outer end of the wing, **characterised in that** the maximum height of the wings (7) is reached only outside the diameter of the feed opening (5).

2. Throw feeder according to claim 1, **characterised in that** the height of the wings (7) rises from the inner end in a first region and then remains the same in a second region to the outer end.

3. Throw feeder according to one of the claims 1 or 2, **characterised in that** the height of the wings (7) at the inner end is equal to zero.

4. Throw feeder according to one of the claims 1 to 3, **characterised in that** the height of the wings (7) at the inner end is smaller than half the maximum height of the wings (7).

5. Throw feeder according to one of the claims 1 to 4, **characterised in that** the inner ends of the wings (7) are spaced from the hub (8) of the base plate (2).

6. Throw feeder according to one of the claims 1 to 5, **characterised in that** a circumferential ejection opening (6) is provided for fuel, which is arranged normal to the axis of rotation (3) of the centrifugal wheel, so that fuel in the plane of the centrifugal wheel can be ejected from the centrifugal wheel.

## Revendications

1. Installation de brûleur avec chargeur par éjection comprenant au moins un boîtier (1) comportant au moins une ouverture d'introduction (5) de combustible qui est concentrique à l'axe de rotation (3) d'une roue centrifuge et, au moins une ouverture d'éjection (6) du carburant et la roue centrifuge ayant plusieurs aubes (7) montées sur une plaque de base (2), la hauteur des aubes (7) augmentant en direction axiale au moins dans une zone, et restant constante dans un ou plusieurs zones restantes, et la hauteur des aubes (7) étant plus faible à l'extrémité interne des aubes (7) qu'à leur extrémité externe,
**caractérisée en ce que**
la hauteur maximum des aubes (7) n'est atteinte qu'à l'extérieur du diamètre de l'ouverture d'introduction (5).

2. Chargeur par éjection conforme à la revendication 1,
**caractérisé en ce que**
la hauteur des aubes (7) augmente à partir de leur extrémité interne jusque dans une première zone, puis reste constante dans une seconde zone jusqu'à leur extrémité externe.

3. Chargeur par éjection conforme à l'une des revendications 1 et 2,
**caractérisé en ce que**
la hauteur des aubes (7) est approximativement nulle au niveau de leur extrémité interne.

4. Chargeur par éjection conforme à l'une des revendications 1 à 3,
**caractérisé en ce qu'**
au niveau de leur extrémité interne, la hauteur des aubes (7) est inférieure à la moitié de leur hauteur maximum (7).

5. Chargeur par éjection conforme à l'une des revendications 1 à 4,
**caractérisé en ce que**
les extrémités internes des aubes (7) sont situées à distance du moyeu (8) de la plaque de base (2).

6. Chargeur par éjection conforme à l'une des revendications 1 à 5,
**caractérisé en ce qu'**
il est prévu une ouverture d'éjection périphérique (6) du carburant qui est perpendiculaire à l'axe de rotation (3) de la roue centrifuge de sorte que le carburant puisse être éjecté hors de la roue centrifuge, dans le plan de cette roue centrifuge.
